# EUROPEAN PATENT APPLICATION

(11) **EP 3 944 364 A1**
(43) Date of publication of application: **26.01.2022**
(21) Application number: 19920090.8
(22) Date of filing: 18.03.2019
(51) Int. Cl.: H01M 4/13, B32B 23/04, H01M 4/62

(54) **SLURRY**

(71) Applicant: Daicel Corporation, Osaka 530-0011 (JP)
(72) Inventor: SATO, Hiroki, Tokyo 108-8230 (JP); UETOMO, Atsuhiro, Tokyo 108-8230 (JP)
(74) Representative: Grünecker Patent- und Rechtsanwälte PartG mbB
(86) International application number: PCT/JP2019/011236
(87) International publication number: WO 2020/188707

(57) **Abstract**

An object of the present invention is to provide a slurry having a viscosity that gives a good coating property at a temperature near room temperature (for example, at 25°C), exhibiting a suppressed decrease in the viscosity during heating to a high temperature drying condition (for example, to 80°C), and thus making its coating film resistant to collapse in shape. A slurry according to an embodiment of the present invention contains at least a binder and a fibrous material, wherein a ratio of a lowest viscosity up to 80°C (lowest viscosity during heating to 80°C) to a viscosity at 25°C (viscosity at 25°C), (lowest viscosity during heating to 80°C)/(viscosity at 25°C), is 0.12 or greater. The slurry according to the present invention preferably further contains an active material.

## Description

### Technical Field

The present invention relates to a slurry, an electrode including a laminate of an electrode active material layer and a current collector, the electrode active material layer being formed using the slurry, and a battery provided with the electrode.

### Background Art

In recent years, it has been examined to mount electricity storage devices such as lithium-ion secondary cells in hybrid vehicles and electric vehicles in addition to information-related devices such as smartphones and notebook computers. Therefore, such electricity storage devices are required to have a smaller size, a higher capacity, and a longer life. In particular, there is a growing demand for increase in a thickness of an electrode to achieve increased energy density for higher capacity.

Typically, in an electrode, an active material is bonded to a current collector in the following manner: a slurry, which is prepared by kneading an active material, a binder, and a solvent, is applied to a current collector at approximately room temperature (for example, at 25°C); raising the temperature to a high temperature (for example, to 80°C) to dry and solidify the coating film, and thus forming an electrode active material layer (solidified product). It is known to use styrene-butadiene rubber (SBR) or carboxymethyl cellulose (CMC) as the binder (Patent Document 1).

When the slurry described above is thickly applied to a current collector to increase the thickness of an electrode, the viscosity of the resulting coating film decreases during the subsequent heating to a high temperature drying condition (for example, 80°C), and the shape of the coating film collapses due to the weight of the coating film itself before the coating film is dried and solidified. This results in a difference between the thickness of a center portion of the coating film and the thickness of an edge portion of the coating film, leading to an uneven density of active material in the electrode active material layer. In order to prevent the shape of the coating film from collapsing, there is a practice of first pre-drying the coating film at a relatively low temperature (for example, from 40°C to 60°C) and then gradually raising the drying temperature. However, such practice requires a large amount of time, reducing production efficiency.

Meanwhile, in a case where a blending amount of water-soluble polysaccharides having a thickening effect, such as CMC, is increased in order to prevent the shape of the coating film from collapsing during heating to a high temperature drying condition, the slurry viscosity may be excessively high at a temperature near room temperature (for example, at 25°C), impairing coating property. This, in turn, makes it difficult to apply the slurry on a current collector evenly, resulting in reduced proportion of the amount of active material in the electrode.

From this background, there is a demand for a slurry having a small change in viscosity with regard to change in temperature (low temperature dependence of viscosity) which allows for efficient drying of a coating film at a high temperature.

### Citation List

### Patent Document

Patent Document 1: JP 2009-43641 A

### Summary of Invention

### Technical Problem

Therefore, an object of the present invention is to provide a slurry having a viscosity that gives a good coating property at a temperature near room temperature (for example, at 25°C), exhibiting a suppressed decrease in the viscosity during heating to a high temperature drying condition (for example, to 80°C), and thus making its coating film resistant to collapse in shape.

Another object of the present invention is to provide an electrode including a laminate of an electrode active material layer and a current collector, the electrode active material layer including a solidified product of the slurry.

Yet another object of the present invention is to provide a cell provided with the electrode.

### Solution to Problem

As a result of diligent research to solve the problems described above, the present inventors discovered that blending a fibrous material together with a binder in a slurry achieves a low temperature dependence of viscosity, where the low temperature dependence of viscosity means that the slurry has a viscosity that gives a good coating property at a temperature near room temperature (for example, at 25°C), exhibits a suppressed decrease in the viscosity during heating to a high temperature drying condition (for example, to 80°C), and thus makes its coating film resistant to collapse in shape. Furthermore, the present inventors discovered that a high capacity battery can be efficiently produced by blending an active material to the slurry and forming an electrode having an electrode active material layer (solidified product) that is applied to and dried on a current collector. The present invention was completed based on these findings.

Specifically, a first aspect of an embodiment of the present invention provides a slurry containing at least a binder and a fibrous material, wherein a ratio of a lowest viscosity up to 80°C (lowest viscosity during heating to 80°C) to a viscosity at 25°C (viscosity at 25°C), (lowest viscosity during heating to 80°C)/(viscosity at 25°C), is 0.12 or greater.

In the slurry according to the first aspect, a total solid content concentration of the binder and the fibrous material may be from 0.02 to 20 wt.%.

In the slurry according to the first aspect, the fibrous material may be a cellulose fiber.

In the slurry according to the first aspect, the fibrous material may have an average thickness from 1 to 1000 nm while an average aspect ratio from 10 to 1000.

The present invention also provides a solidified product of the slurry according to the first aspect.

A second aspect of an embodiment of the present invention provides a slurry according to the first aspect, wherein the slurry further contains an active material.

In the slurry according to the second aspect, a total solid content concentration of the binder, the fibrous material, and the active material may be from 20 to 70 wt.%.

The present invention also provides a solidified product of the slurry according to the second aspect.

The present invention also provides an electrode including a laminate of an electrode active material layer and a current collector, the electrode active material layer including the solidified product of the slurry according to the second aspect.

In the electrode, a ratio of a film thickness at an edge of the electrode active material layer (edge film thickness) to a film thickness at a center of the electrode active material layer (center film thickness), (edge film thickness)/(center film thickness), may be 0.9 or greater.

The present invention further provides a battery provided with the electrode.

### Advantageous Effects of Invention

The slurry according to an embodiment of the present invention has the configuration described above, and thus the slurry has a viscosity which gives a good coating property at a temperature near room temperature (for example, at 25°C) and can efficiently form an even and thick coating film on an adherend (for example, a current collector). At the same time, the coating film formed by the slurry according to an embodiment of the present invention is resistant to collapse in shape since a decrease in the viscosity is suppressed even during heating to a high temperature condition (for example, to 80°C). As such, even if the slurry is being heated to 80°C and dried immediately after being thickly applied to an adherend, an even and thick coating film (solidified product) can be formed efficiently without losing the shape.

A high capacity battery can be efficiently produced by adding an active material to the slurry according to an embodiment of the present invention and forming an electrode having an electrode active material layer that is applied to and dried on a current collector. As such, the capacity can be increased efficiently in the battery obtained using the slurry according to an embodiment of the present invention, and therefore such a battery can be suitably used in an information device such as a smart phone or a notebook computer, or, a hybrid vehicle or an electric vehicle.

### Description of Embodiments

### Slurry

A slurry according to an embodiment of the present invention contains at least a binder and a fibrous material, wherein a ratio of a lowest viscosity up to 80°C (lowest viscosity during heating to 80°C) to a viscosity at 25°C (viscosity at 25°C), that is, lowest viscosity during heating to 80°C/viscosity at 25°C, is 0.12 or greater. The slurry according to an embodiment of the present invention may contain other components in addition to the binder and the fibrous material. For example, when the slurry according to an embodiment of the present invention is used to form an electrode active material layer of an electrode of a battery, the slurry preferably further contains an active material.

In the slurry according to an embodiment of the present invention, the fibrous materials are dispersed in the binder and entangled with each other, forming a three-dimensional network structure. Such a three-dimensional network structure stays preserved even when the slurry is heated to a high temperature (for example, to 80°C), inhibiting a decrease in viscosity, which means that the slurry has a reduced temperature dependence of viscosity. As such, when the slurry viscosity is adjusted to one that gives a good coating property at a temperature near room temperature (for example, at 25°C) to form a thick coating film, and the coating film is subjected to heating to a high temperature drying condition (for example, 80°C) and drying immediately after its formation, the decrease in the slurry viscosity is suppressed such that the slurry can form the coating film that is resistant to collapse in shape. Therefore, an even and thick coating film (solidified product) can be formed efficiently.

### <Binder>

The binder according to an embodiment of the present invention is a compound that exhibits adhesiveness and has the effect of fixing the coating film to a surface of an adherend when the slurry is applied to the adherend and dried. From a viewpoint of lessening the burden on the environment, the binder is preferably an aqueous binder, for example, an aqueous binder having a solubility in water at 20°C of 1 g/L or greater, or an aqueous binder dispersed in water at 20°C with a particle size of 1 µm or smaller (particle size measurement method: laser diffraction method).

The binder preferably has excellent heat resistance, and preferably has a melting point (or decomposition temperature in case of the binder having no melting point) of, for example, 160°C or higher (preferably 180°C or higher, particularly preferably 200°C or higher). Note that the upper limit of the melting point (decomposition temperature in case of the binder having no melting point) of the binder is, for example, 400°C.

The binder may have a viscosity adjustment function. A 1 wt.% aqueous solution of the binder according to an embodiment of the present invention has a viscosity (at 25°C and 60 rotations) of preferably from 10 to 5000 mPa·s, particularly preferably from 50 to 3000 mPa·s, most preferably from 100 to 2000 mPa s. When the viscosity of the 1 wt.% aqueous solution of the binder is in the ranges described above, addition of a small amount of the binder can impart a viscosity suitable for coating to the slurry.

Examples of the binder include a polysaccharide derivative (1), a compound having a constituent unit represented by Formula (2) below, and a compound having a constituent unit represented by Formula (3) below. One of these solvents can be used alone or two or more in combination. 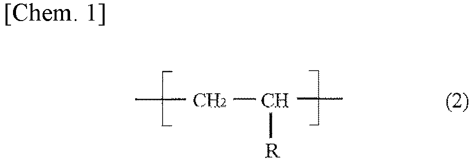 where R represents a hydroxyl group, a carboxyl group, a phenyl group, an N-substituted or unsubstituted carbamoyl group, or a 2-oxo-1-pyrrolidinyl group; 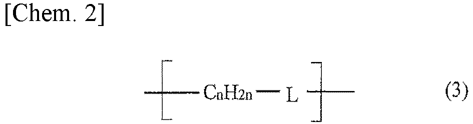 where n represents an integer of 2 or greater and L represents an ether bond or (-NH-) group.

Examples of the N-substituted carbamoyl group include N-C₁₋₄ alkylsubstituted carbamoyl groups such as -CONHCH(CH₃)₂ and -CON(CH₃)₂ groups.

The carboxyl group may form a salt with an alkali.

n described above is an integer of 2 or greater and, for example, an integer of 2 to 5, preferably an integer of 2 or 3. Therefore, the [CₙH₂ₙ] group in Formula (3) is an alkylene group having 2 or more carbons, and examples thereof include a dimethylene group, a methylmethylene group, a dimethylmethylene group, and a trimethylene group.

The compound having a constituent unit represented by Formula (2) above and the compound having a constituent unit represented by Formula (3) above may have a constituent unit other than the constituent unit represented by Formula (2) and the constituent unit represented by Formula (3), respectively.

Examples of the compound having a constituent unit represented by Formula (2) include diene rubbers such as styrene-butadiene rubber (SBR), acrylonitrile-butadiene rubber (NBR), methacrylic acid-butadiene rubber (MBR), and butadiene rubber (Br); acrylic polymers such as polyacrylic acid, sodium polyacrylate, acrylic acid/maleic acid copolymer·sodium salt, and acrylic acid/sulfonic acid copolymer·sodium salt; acrylamide polymers such as polyacrylamide, poly-N-isopropyl acrylamide, and poly-N,N-dimethylacrylamide; and polyvinylpyrrolidone.

Examples of the compound having a constituent unit represented by Formula (3) include polyalkylene glycols such as polyethylene glycol and polypropylene glycol; and polyethyleneimine.

The polysaccharide derivative (1) is a compound in which two or more monosaccharides are polymerized by glycosidic bonds. In the present invention, especially, a compound formed by polymerizing glucose (for example, α-glucose or β-glucose) by glycosidic linkages, or a derivative thereof is preferred, and, in particular, at least one selected from cellulose, starch, glycogen, and derivative thereof is particularly preferred.

The polysaccharide derivative (1) is particularly preferably a cellulose or a derivative of a cellulose, in that they have excellent heat resistance and adhesive force, and that addition of a small amount can impart a viscosity suitable for coating to the slurry.

Examples of the cellulose or derivatives thereof include compounds having a constituent unit represented by Formula (1-1) below. 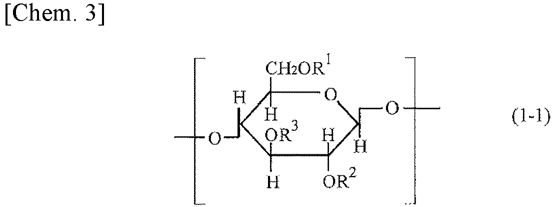 wherein, R¹ to R³ are the same or different, and each represents a hydrogen atom, or an alkyl group having from 1 to 5 carbons containing a hydroxyl group or carboxyl group. Note that the hydroxyl group and carboxyl group may form a salt with an alkali.

Examples of the alkyl group having from 1 to 5 carbons include a methyl group, an ethyl group, a propyl group, an isopropyl group, a butyl group, an isobutyl group, an s-butyl group, a t-butyl group, and a pentyl group.

The hydroxyl group and carboxyl group may form a salt with an alkali, for example, forming a salt with sodium or ammonium, or a nitrogen-containing heterocyclic compound (such as imidazole).

Specific examples of the derivative of a cellulose include hydroxyethyl cellulose, hydroxypropyl cellulose, carboxymethyl cellulose, and alkali salts thereof (for example, sodium carboxymethylcellulose and ammonium carboxymethylcellulose).

The binder according to an embodiment of the present invention is preferably a polysaccharide derivative (1), particularly preferably a cellulose or a derivative of a cellulose, from the viewpoints of their excellent viscosity imparting effect, that is, ability to impart the slurry with a viscosity suitable for coating by addition of small amount of the binder, and their excellent heat resistance and adhesive force.

### Fibrous material

The fibrous materials according to an embodiment of the present invention preserves a fibrous shape even in the slurry and are entangled with each other, forming a three-dimensional network structure. Such three-dimensional network structure stays preserved even when the fibrous materials are heated to a high temperature (for example, to 80°C), and thus a decrease in viscosity is inhibited, that is, the slurry viscosity has a reduced dependency on temperature. As such, when the slurry viscosity is adjusted to one that gives a good coating property at a temperature near room temperature (for example, at 25°C) to form a thick coating film, and the coating film is subjected to heating to a high temperature drying condition (for example, 80°C) and drying immediately after its formation, the decrease in the slurry viscosity is suppressed such that the slurry can form the coating film that is resistant to collapse in shape. Therefore, an even and thick coating film (solidified product) can be formed efficiently.

The slurry according to an embodiment of the present invention can contain one of fibrous materials alone, or two or more thereof in combination.

Examples of the fibrous material include cellulose fibers, aramid fibers, polyphenylene sulfide fibers, polyimide fibers, fluorine fibers, glass fibers, carbon fibers, poly-p-dioxanone fibers, polyether ether ketone fibers, and liquid crystal polymer fibers.

Furthermore, the fibrous material may have electrical conductivity, and examples of materials that can constitute a fibrous material having electrical conductivity include a metal, a semiconductor, a carbon material, and an electrically conductive polymer.

Examples of the metal include known or customary metals such as gold, silver, copper, iron, nickel, cobalt, tin, and alloys thereof.

Examples of the semiconductor include known or customary semiconductors such as cadmium sulfide and cadmium selenide.

Examples of the carbon material include known or customary carbon materials such as carbon fibers and carbon nanotubes.

Examples of the electrically conductive polymer include polyacetylene, polyene, poly p-phenylene, poly p-phenylene, polypyrrole, polyaniline, polythiophene, and derivatives thereof (e.g., those having a common polymer backbone with a substituent such as an alkyl group, a hydroxyl group, a carboxyl group, an ethylenedioxy group, or the like; and specific examples thereof include polyethylenedioxythiophene).

The average thickness (average diameter D) of the fibrous material is not particularly limited, but may be, for example, from 1 to 1000 nm; in particular, the average thickness (average diameter D) of the fibrous material is preferably from 3 to 500 nm, particularly preferably from 3 to 200 nm, from the viewpoints of formation of a stable three-dimensional network structure, in which fibrous materials are entangled with each other in the binder, and of suppression of the temperature dependence of slurry viscosity. Note that the average thickness of the fibrous material is determined by measuring the thickness (diameter) of a sufficient number (for example, 10 or more) of the fibrous materials using an electron microscope (SEM or TEM) or an atomic force microscope (AFM) and arithmetically averaging the results.

The average length (average length L) of the fibrous material is not particularly limited, but may be, for example, from 0.01 to 1000 µm; in particular, the average length (average length L) of the fibrous material is preferably from 0.3 to 200 µm, particularly preferably from 0.5 to 100 µm, most preferably from 1 to 20 µm, from the viewpoints of formation of a stable three-dimensional network structure, in which fibrous materials are entangled with each other in the binder, and of suppression of the temperature dependence of slurry viscosity. Note that the average length of the fibrous material is determined by measuring the length of a sufficient number (for example, 10 or more) of the fibrous materials using an electron microscope (SEM or TEM) and arithmetically averaging the results. The length of the fibrous material should be measured in a straight state, but the fibrous material is actually bent in many cases. So, a projected diameter and a projected area of the fibrous material are calculated using an image analyzer from the electron microscopic image, and, assuming that the fibrous material is a cylindrical body, the length of the fibrous material is calculated from the following formula.
Length = projected area/projected diameter

The average aspect ratio (average length/average thickness) of the fibrous material is not particularly limited, but may be, for example, from 10 to 1000; in particular, the average aspect ratio (average length/average thickness) of the fibrous material is preferably from 15 to 500, particularly preferably from 20 to 100, from the viewpoints of formation of a stable three-dimensional network structure, in which fibrous materials are entangled with each other in the binder, and of suppression of the temperature dependence of slurry viscosity.

Especially, the fibrous material is preferably a material that is less likely to deteriorate due to an oxidation-reduction reaction of a battery because such material has excellent stability over time. In particular, the fibrous material is preferably at least one selected from a cellulose fiber, an aramid fiber, a carbon fiber, and a carbon nanotube, and is preferably a cellulose fiber and/or an aramid fiber, particularly preferably a cellulose fiber, from the viewpoints of formation of a stable three-dimensional network structure, in which fibrous materials are entangled with each other in the binder.

### Cellulose fiber

The cellulose fibers can be manufactured by a known method such as milling, grinding, shredding, or crushing of raw material pulp. In addition, cotton linter and wood pulp (hardwood pulp and softwood pulp) can be used as the raw material pulp.

Commercially available products such as microfibrous cellulose "CELISH" (available from Daicel FineChem Ltd.) may be used as the cellulose fiber.

### Aramid fiber

The aramid fiber is a fiber including a polymer (i.e., a wholly aromatic polyamide) having a structure in which two or more aromatic rings are bonded via an amide bond, and the wholly aromatic polyamide includes a meta type and a para type. Examples of the wholly aromatic polyamide include polymers having a constituent unit represented by Formula (a) below:

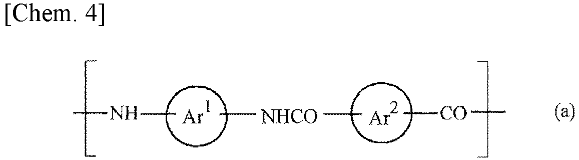

where Ar¹ and Ar² are the same or different, and each represents an aromatic ring or a group in which two or more aromatic rings are bonded via a single bond or a linking group. Examples of the aromatic ring include aromatic hydrocarbon rings with from 6 to 10 carbon atoms, such as a benzene ring or a naphthalene ring. Examples of the linking group include a divalent hydrocarbon group (for example, a linear or branched alkylene group having from 1 to 18 carbons, and a divalent alicyclic hydrocarbon group having from 3 to 18 carbons), a carbonyl group (-CO-), an ether bond (-O-), an ester bond (-COO-), -NH-, and -SO₂-. The aromatic ring can also have various substituents [such as halogen atoms, alkyl groups (e.g., C₁₋₄ alkyl groups), oxo groups, hydroxyl groups, substituted oxy groups (e.g., C₁₋₄ alkoxy groups and C₁₋₄ acyloxy groups), carboxyl groups, substituted oxycarbonyl groups (e.g., C₁₋₄ alkoxycarbonyl groups), cyano groups, nitro groups, substituted or unsubstituted amino groups (e.g., mono- or di-C₁₋₄ alkylamino groups), and sulfo groups]. In addition, an aromatic or non-aromatic heterocyclic ring may be fused to the aromatic ring.

The aramid fiber can be manufactured, for example, by reacting at least one of aromatic diamine to a halide of at least one of aromatic dicarboxylic acid (solution polymerization, interfacial polymerization, or the like).

Examples of the aromatic dicarboxylic acid include isophthalic acid, terephthalic acid, 1,4-naphthalene dicarboxylic acid, 2,6-naphthalene dicarboxylic acid, 4,4'-biphenyl dicarboxylic acid, 3,3'-biphenyldicarboxylic acid, and 4,4'-diphenyletherdicarboxylic acid.

Examples of the aromatic diamine acid include p-phenylenediamine, m-phenylenediamine, 4,4'-diaminobiphenyl, 2,4-diaminodiphenylamine, 4,4'-diaminobenzophenone, 4,4'-diaminodiphenylether, 4,4'-diaminodiphenylmethane, 4,4'-diaminodiphenylamine, 4,4'-diaminodiphenylsulfone, 2,4-diaminotoluene, 2,6-naphthalenediamine, and 1,5-naphthalenediamine.

The aramid fiber can be manufactured by spinning the wholly aromatic polyamide into fibers using known customary methods (e.g., via spinning, washing, drying, and other processes). Furthermore, after the wholly aromatic polyamide is spun into fibers, the fibers can be, for example, shred as necessary. For example, an ultrahigh-pressure homogenizer or the like can be used to add strong mechanical shear force for microfibrillation.

Commercially available products such as a fibrous material aramid "TIARA" (available from Daicel FineChem Ltd.) may be used as the aramid fiber.

### Lowest viscosity during heating to 80°C/viscosity at 25°C

The lowest viscosity up to 80°C (lowest viscosity during heating to 80°C) as well as the viscosity at 25°C (viscosity at 25°C) of the slurry according to an embodiment of the present invention are complex viscosities respectively measured at a frequency of 1 Hz using an MCR rheometer at from 25°C to 80°C.

The term "lowest viscosity up to 80°C" refers to, for example, a viscosity having the lowest value during the period of viscosity change when the slurry according to an embodiment of the present invention is being heated from 25°C to 80°C at 15°C/minute.

Since the slurry according to an embodiment of the present invention contains the binder and the fibrous material described above, the temperature dependence of slurry viscosity is suppressed, and the ratio of the lowest viscosity during heating to 80°C to the viscosity at 25°C (lowest viscosity during heating to 80°C)/(viscosity at 25°C) is 0.12 or greater. Since the slurry according to an embodiment of the present invention has a ratio of lowest viscosity during heating to 80°C/viscosity at 25°C of 0.12 or greater, when the slurry viscosity is adjusted to one that gives a good coating property at a temperature near room temperature (for example, at 25°C) to form a thick coating film, and the coating film is subjected to heating to a high temperature drying condition (for example, 80°C) and drying immediately after its formation, the decrease in the slurry viscosity is suppressed such that the slurry can form the coating film that is resistant to collapse in shape. Therefore, an even and thick coating film can be formed efficiently. From the perspective of further lowering the temperature dependence of slurry viscosity to efficiently form an even and thick coating film, the slurry preferably has a ratio of (lowest viscosity during heating to 80°C)/(viscosity at 25°C) of 0.15 or greater, more preferably 0.2 or greater, more preferably 0. 25 or greater, more preferably 0.3 or greater, more preferably 0.4 or greater, more preferably 0.5 or greater, more preferably 0.6 or greater, more preferably 0.7 or greater, even more preferably 0.8 or greater, and particularly preferably 0.9 or greater.

When the slurry according to an embodiment of the present invention is being heated to 80°C, the slurry viscosity typically decreases compared to the viscosity at 25°C. However, as the temperature rises, the slurry may partially gel, and the slurry viscosity may increase compared to the viscosity at 25°C. When the slurry gels at a high temperature, drying the slurry becomes difficult, and may take a long time, reducing efficiency. Therefore, from the perspective of efficient drying at a high temperature, the slurry according to an embodiment of the present invention preferably has a ratio of a highest viscosity up to 80°C (highest viscosity during heating to 80°C) to a viscosity at 25°C (viscosity at 25°C), that is, (highest viscosity during heating to 80°C)/(viscosity at 25°C), of 3.0 or smaller, more preferably 2.5 or smaller, more preferably 2.0 or smaller, more preferably 1.5 or smaller, and particularly preferably 1.0 or smaller.

The term "highest viscosity up to 80°C" refers to, for example, a viscosity having the highest value during the period of viscosity change when the slurry according to an embodiment of the present invention is being heated from 25°C to 80°C at 15°C/minute.

The viscosity of the slurry according to an embodiment of the present invention, at 25°C, is, for example, from 0.6 to 100 Pa·s (preferably from 0.8 to 50 Pa·s, particularly preferably from 1.0 to 30 Pa·s) from the perspective of providing excellent coatability. The viscosity of the slurry at 25°C can be adjusted to the above ranges by, for example, adding a solvent. Examples of the solvent include water; alcohols such as methanol, ethanol, propanol, and 2-propanol; cyclic ethers such as tetrahydrofuran and 1,4-dioxane; chain amides such as N,N-dimethylformamide and N,N-dimethylacetamide; cyclic amides such as N-methylpyrrolidone and N-ethylpyrrolidone; and sulfoxides such as methyl sulfoxide. Among these solvents, water is preferably used from the perspective of having small environmental load and excellent safety.

From the perspective of easily preserving the shape of the coating film when raising the temperature to a high temperature drying condition, the lowest viscosity of the slurry according to an embodiment of the present invention during heating to 80°C is preferably, for example, from 0.25 to 90 Pa s, more preferably from 0.5 to 45 Pa s, and particularly preferably from 1 to 30 Pa·s.

### Active material

When the slurry according to an embodiment of the present invention is used to form an electrode active material layer of an electrode of a battery, the slurry preferably further contains an active material. Examples of the active material include carbon materials (carbon), elemental metals, elemental silicon (silicon), silicon compounds, mineral substances (zeolite, diatomaceous earth, fired diatomaceous earth, talc, kaolin, sericite, bentonite, smectite, clay, etc.), metal carbonates (magnesium carbonate, heavy calcium carbonate, light calcium carbonate, etc.), metal oxides [alumina, zinc oxide, manganese dioxide, titanium dioxide, lead dioxide, silver oxide, nickel oxide, and lithium-containing complex oxide (e.g., LiCoO₂, lithium titanate, etc.)], metal hydroxides (aluminum hydroxide, calcium hydroxide, magnesium hydroxide, nickel hydroxide, cadmium hydroxide, etc.), and metal sulfates (calcium sulfate, barium sulfate, etc.). One of these materials may be used alone, or two or more thereof can be used in combination. Among these materials, a metal oxide, a lithium-containing complex oxide, an elemental silicon, a silicon compound, or a carbon material is preferred as the active material.

The active material is preferably selected and used depending on the type of the cell. For a lithium-ion battery, a cathode active material is preferably a lithium-containing complex oxide (in particular, lithium cobalt oxide, lithium nickel oxide, lithium manganate, and alloys thereof), and an anode active material is preferably at least one selected from an elemental silicon, a silicon compound, a carbon material (particularly graphite), a metal oxide, and a lithium-containing complex oxide (particularly lithium titanate and niobium titanium oxides).

Examples of the simple silicon include silicon such as amorphous silicon (amorphous silicon) and low crystalline silicon.

Examples of the silicon compound include silicon oxide (such as SiO), metal silicates (calcium silicate, aluminum silicate, magnesium silicate, magnesium aluminosilicate, etc.), alloys of silicon and transition metals (tin, titanium, etc.), silicon composites (such as a composite of silicon and SiO), and silicon carbide.

Examples of the carbon material include natural graphite, artificial graphite, amorphous carbon, hard carbon, graphite, mesocarbon microbeads, and pitch-based carbon fibers.

Examples of the metal oxide used in the anode include alloys and oxides of Ti, Sn, and Co.

### <Additional component>

The slurry according to an embodiment of the present invention may further contain one or more other components in addition to the components described above. Examples of the additional component include, for example, an electrical conductivity imparting material. Examples of the electrical conductivity imparting material include metal powder, conductive polymers, and acetylene black.

The slurry according to an embodiment of the present invention can be manufactured by uniformly mixing the compounds described above using a generally known device for mixing, such as a rotation/revolution-type agitating and defoaming device, a homodisper, a homogenizer, a planetary mixer, a three-roll mill, or a bead mill. Here, each component may be mixed at the same time or sequentially.

A content of the binder in the total amount of nonvolatile matter contained in the slurry according to an embodiment of the present invention is, for example, from 0.01 to 2.0 parts by weight, preferably from 0.1 to 1.5 parts by weight, particularly preferably from 0.3 to 1.0 parts by weight.

A content of the fibrous material in the total amount of nonvolatile matter contained in the slurry according to an embodiment of the present invention is, for example, from 0.01 to 5.0 wt.%, preferably from 0.1 to 3.0 wt.%, particularly preferably from 0.3 to 1.5 wt.%.

A total content of the fibrous material and the binder in the total amount of nonvolatile matter contained in the slurry according to an embodiment of the present invention is, for example, from 0.01 to 10.0 wt.%, preferably from 0.1 to 5.0 wt.%, particularly preferably from 0.5 to 2.0 wt.%.

When the slurry according to an embodiment of the present invention contains a binder, a content of the fibrous material is preferably approximately from 0.5 to 5.0 times, particularly preferably from 1.0 to 3 times, most preferably from 1.0 to 2.0 times, the content of the binder.

In the slurry according to an embodiment of the present invention, a total solid content concentration of the binder and the fibrous material is, for example, from 0.02 to 20 wt.%, preferably from 0.1 to 10 wt.%, more preferably from 0.5 to 5 wt.%. When the slurry according to an embodiment of the present invention has such a configuration, the configuration preferably facilitates the adjustment of the slurry viscosity at 25°C to impart good coating property, while suppressing the temperature dependence of the slurry viscosity.

When the slurry according to an embodiment of the present invention contains an active material, a proportion of the active material in the total amount (100 wt.%) of nonvolatile matter contained in the slurry is, for example, 90 wt.% or greater, preferably 95 wt.% or greater, particularly preferably 99 wt.% or greater. The active material contained in this range in the slurry according to an embodiment of the present invention can increase battery capacity of the electrode prepared using the slurry according to an embodiment of the present invention.

When the slurry according to an embodiment of the present invention contains an active material and a binder, a content of the binder in the slurry according to an embodiment of the present invention is from 0.01 to 10.0 parts by weight, preferably from 0.1 to 5.0 parts by weight, particularly preferably from 0.3 to 2.0 parts by weight, per 100 parts by weight of the active material contained in the slurry. The binder contained in the ranges described above in the slurry according to an embodiment of the present invention facilitates the improvement of the adhesion to a current collector while suppressing the decrease in battery capacity. When the content of the binder exceeds the ranges described above, the adhesion to a current collector readily improves, but the battery capacity tends to decrease. Meanwhile, when the content of the binder falls below the ranges described above, the adhesion to a current collector may become insufficient to cause the electrode active material layer to fall off from the current collector, causing the decrease in the battery capacity.

When the slurry of the present invention contains an active material, a total solid concentration of the binder, the fibrous material, and active material is, for example, from 20 to 70 wt.%, preferably from 35 to 60 wt.%. When the slurry according to an embodiment of the present invention has such a configuration, the configuration preferably facilitates the adjustment of the slurry viscosity at 25°C to impart good coating property, while suppressing the temperature dependence of the slurry viscosity.

When the slurry according to an embodiment of the present invention contains an active material, a content of the binder in a supernatant obtained by centrifuging (for example, 5000 rpm × 5 minutes) the slurry is 45 wt.% or greater, preferably 60 wt.% or greater, particularly preferably 80 wt.% or greater, and most preferably 95 wt.% or greater, of the total amount of binder contained in the slurry. When the slurry according to an embodiment of the present invention has such a configuration, the slurry can exhibit excellent adhesion even without an increase in the binder content, or even with a reduction in the binder content compared to the content known in the related art. Therefore, the slurry according to an embodiment of the present invention can improve adhesion without the reduction in the content proportion of the active material, or can improve adhesion with the increase in the content proportion of the active material compared to the content known in the art, and can form an electrode having both excellent adhesion and high battery capacity.

As described above, the fibrous materials of the slurry according to an embodiment of the present invention are dispersed in the binder and are entangled with each other to form a three-dimensional network. Such a three-dimensional network structure stays preserved even when the slurry is heated to a high temperature (for example, to 80°C), inhibiting a decrease in viscosity, which means that the slurry has a reduced temperature dependence of viscosity. As such, when the slurry viscosity is adjusted to one that gives a good coating property at a temperature near room temperature (for example, at 25°C) to form a thick coating film, and the coating film is subjected to heating to a high temperature drying condition (for example, 80°C) and drying immediately after its formation, the decrease in the slurry viscosity is suppressed such that the slurry can form the coating film that is resistant to collapse in shape. Therefore, an even and thick coating film (solidified product) can be formed efficiently. When the slurry does not contain a fibrous material and only contains a binder, the temperature dependence of slurry viscosity increases, and the shape of the coating film tends to collapse, making it difficult to efficiently form an even and thick coating film (solidified product).

The adherend, to which the slurry according to an embodiment of the present invention is applied, is not limited, and various known or commonly used substrates having a surface for coating can be used, such as a metal substrate, a plastic substrate, a ceramic substrate, a semiconductor substrate, a glass substrate, a paper substrate, and a wood substrate (wooden substrate). In particular, when the slurry according to an embodiment of the present invention contains an active material, it is preferable to form an electrode active material layer using a metal foil, which serves as a current collector, as the adherend.

A coating thickness of the slurry according to an embodiment of the present invention is preferably 5 µm or greater, more preferably 50 µm or greater, even more preferably 100 µm or greater, and particularly preferably 200 µm or greater after drying. Since the slurry according to an embodiment of the present invention has a low temperature dependence of viscosity, the viscosity is less likely to decrease even at a high temperature, and even when the film thickness of the coating film is 100 µm or greater, the slurry can be dried and solidified efficiently to form a thick coating film (solidified product) having an even film thickness. Meanwhile, from the perspective of preserving the shape of the coating film at a high temperature, a thickness of the coating film after drying is preferably, for example, 500 µm or less.

Examples of the method of applying the slurry include screen printing methods, mask printing methods, offset printing methods, inkjet printing methods, flexographic printing methods, gravure printing methods, stamping, dispensing, squeegee printing methods, silk screen printing methods, spraying and brushing. Furthermore, a film applicator, a bar coater, a die coater, a comma coater, a gravure coater, a blade coater, and the like can be used for applying the slurry.

Since the slurry according to an embodiment of the present invention has a low temperature dependence of viscosity, the shape of the coating film can be preserved even when the coating film is being heated to a high temperature and dried immediately after application. Therefore, the coating film can be efficiently dried and solidified in a short time. The method of drying the applied slurry is not particularly limited, and examples thereof include drying methods through heating, pressure reduction, blowing, and the like. From the perspective of efficient drying and solidification, the drying temperature is preferably from 70°C to 150°C, more preferably from 80 to 120°C. The drying time is, for example, from 1 minute to 5 hours, preferably from 10 minutes to 1 hour, under the drying temperature condition described above. In addition, the degree and time of pressure reduction, the amount of gas to be blown, the blowing rate, the blowing temperature, the type of gas to be blown, the degree of drying, the area to be blown, the direction of the gas to be blown, and the like can be selected arbitrarily.

When the slurry according to an embodiment of the present invention contains an active material, the slurry can be suitably used to form an electrode active material layer for a battery. Furthermore, when the slurry according to an embodiment of the present invention is used, an electrode having a high battery capacity can be formed efficiently.

In addition to the use in an electrode of a battery, the slurry according to an embodiment of the present invention can also be suitably used in various applications involving application, drying, and solidification on an adherend, such as paints, foods, and drug additives.

### Electrode

The electrode according to an embodiment of present invention contains a laminate of an electrode active material layer and a current collector, the electrode active material layer including a solidified product of the slurry described above which contains an active material. The electrode according to an embodiment of the present invention may contain components other than the solidified product of the slurry and the current collector.

The electrode according to an embodiment of the present invention can be manufactured by, for example, applying the slurry to at least one surface of the current collector and drying the slurry to solidify the slurry.

The current collector includes a positive electrode current collector and a negative electrode current collector, and the positive electrode current collector is formed of, for example, an aluminum foil. In addition, the negative electrode current collector is formed of, for example, a copper foil.

The amount of slurry applied to the current collector, the thickness after drying, the coating method, the drying and solidification conditions, and the like are the same as those described above regarding the adherend.

Since the slurry according to an embodiment of present invention has a low temperature dependence of viscosity, even when the coating film is heated to a high temperature for drying and solidification, an electrode active material layer can be formed, wherein the electrode active material layer has a small difference between a film thickness at an edge of the electrode active material layer (edge film thickness) to a film thickness at a center of the electrode active material layer (center film thickness). That is, the ratio of a film thickness at an edge of the electrode active material layer to a film thickness at a center of the electrode active material layer, (edge film thickness)/(center film thickness), is preferably 0.9 or greater, more preferably 0.95 or greater, and even more preferably 0.98 or greater. When the ratio of (edge film thickness)/(center film thickness) of the electrode active material layer is set to 0.9 or greater, the density of the active material in the electrode active material layer are made even, and an electrode having high capacity and high quality can be obtained.

The ratio of a film thickness at an edge of the electrode active material layer to a film thickness at a center of the electrode active material layer, (edge film thickness)/(center film thickness), of the electrode active material layer described above can be measured by the following method.

The slurry according to an embodiment of the present invention is evenly applied to one side of a square copper foil having a thickness of 15 µm and a length of 150 mm such that the thickness of the resulting coating film after drying is 50 µm or greater. Thereafter, with the coating film facing upward, the copper foil is heated to 80°C and subjected to drying and solidification for one hour to form an electrode active material layer. The smallest film thickness at an edge of the formed electrode active material layer is defined as the edge film thickness, while the largest film thickness at a center of the formed electrode active material layer is defined as the center film thickness. Based on these values, the ratio of a film thickness at an edge of the electrode active material layer to a film thickness at a center of the electrode active material layer, (edge film thickness)/(center film thickness), is calculated. The edge film thickness and the center film thickness of the electrode active material layer can be measured by, for example, a micrometer (available from Mitutoyo Corporation).

The electrode of the present invention has particularly excellent adhesion between the electrode active material layer including the solidified product of the slurry described above and the current collector, and has a peel strength of, for example, 2.0 N/m or greater, preferably 3.0 N/m or greater, particularly preferably 3.5 N/m or greater. The upper limit of the peel strength is, for example, 70.0 N/m. Therefore, even when the electrode expands and contracts due to repeated charging and discharging, the electrode active material layer can be prevented from peeling off the current collector, and the cell capacity can be stably maintained over a long period of time.

In addition, the electrode according to an embodiment of the present invention contains the electrode active material layer containing the solidified product of the slurry described above, and can efficiently form an electrode active material layer having a large film thickness (for example, an electrode active material layer having a film thickness of 50 µm or greater, preferably 80 µm or greater, and even more preferably 100 µm or greater). Therefore, the use of the electrode according to an embodiment of the present invention facilitates efficient production of a battery having a high capacity.

### Cell

The cell according to an embodiment of the present invention is provided with the electrode described above. The cell of the present invention may be a wound cell formed by laminating electrodes (positive electrode and a negative electrode) and a separator, winding the laminate, and enclosing the laminate in a container such as a can together with an electrolyte solution, or a laminated cell in which a sheet-shaped product formed by laminating electrodes (positive electrode and a negative electrode) and a separator is encapsulated in a relatively flexible sheath body together with an electrolyte solution.

Examples of the cell according to an embodiment of the present invention include secondary cells such as lithium ion cells, nickel/hydrogen rechargeable cells, and nickel/cadmium cells; primary cells such as manganese dry cells, alkaline manganese cells, and lithium primary cells; and electric double-layer capacitors.

In the battery according to an embodiment of the present invention, an electrode active material layer having a large film thickness (for example, an electrode active material layer having a film thickness of 50 µm or greater) can be efficiently formed on a current collector, making it possible to efficiently increase the battery capacity. Therefore, the cell according to an embodiment of the present invention can suitably be used in information-related devices such as smartphones and notebook computers, hybrid vehicles, electric vehicles, and the like.

### Examples

Hereinafter, the present invention will be described more specifically with reference to examples, but the present invention is not limited by these examples.

### Preparation Example 1 (preparation of cellulose nanofiber (CNF) slurry)

Commercially available hardwood pulp was suspended in water, and 100 L of a 1 wt.% slurry solution (1) was obtained.

Next, the obtained slurry solution was beaten ten times to be refined, with a clearance of 0.15 mm and at a disk rotation speed of 1750 rpm, using a disc refiner (trade name "SUPERFIBRATER400-TFS" available from Hasegawa Refrigeration, Ltd.).

The 1% by weight slurry solution after the refiner treatment was further homogenized 50 times, at a processing pressure of 50 MPa, using a homogenizer (available from Gaulin Corporation, trade name "15M8AT").

The 1% by weight slurry solution after the refiner treatment and the homogenization treatment was repeatedly filtered through gauze to yield a slurry solution having a nonvolatile matter concentration of 9.9% by weight.

Water was added to the obtained 9.9 wt.% slurry solution, and the mixture was stirred using a homodisper (available from Tokushu Kika Kogyo Co., Ltd., Model L) for 5 minutes at 3000 rpm to yield a 1.2 wt.% slurry solution. The obtained 1.2 wt.% slurry solution was CNF slurry solution (1).

Ten strands of fibers contained in the obtained CNF slurry solution (1) were randomly selected, and the lengths and diameters of the selected fibers were measured by observing the fibers using an electron microscope (SEM or TEM). As a result, an average thickness of the 10 fibers was 79.2 nm, an average length thereof was 6.14 µm, and an average aspect ratio (average length/average thickness) thereof was 78.

### Preparation Example 2 (preparation of cellulose nanofiber (CNF) slurry solution)

3 g of commercially available softwood bleached kraft pulp fiber was thoroughly stirred in 297 g of ion exchanged water. Then, 1.25 wt.% of TEMPO (2,2,6,6-tetramethylpiperidine-1-oxyl radical, ALDRICH, Free radical, 98%), 12.5 wt.% of sodium bromide (FUJIFILM Wako Pure Chemical Corporation), 56.8 wt.% of sodium hypochlorite (FUJIFILM Wako Pure Chemical Corporation, Ltd., Cl: 5%) were added, in this order, per 3 g of the pulp. Using a pH stat, the pH of the mixture was maintained at 10.5 by adding a 0.5 M sodium hydroxide dropwise, and an oxidation reaction was carried out at a temperature of 20°C. The dropwise addition was then stopped at an oxidation time of 120 minutes to obtain an oxidized pulp. The oxidized pulp was thoroughly washed with ion exchanged water, subjected to a dehydration treatment, and dried naturally in an atmosphere of 20°C. Thereafter, 1.2 g of the oxidized pulp and 98.8 g of ion exchanged water were stirred at 3000 rpm for 10 minutes using a homodisper (available from Tokushu Kika Kogyo Co., Ltd., Model L) to refine the fibers, resulting in a slurry solution. The solid content concentration of the oxidized pulp in the obtained slurry solution was 1.2 wt.%. The obtained 1.2 wt.% slurry solution was CNF slurry solution (2).

Ten strands of fibers contained in the obtained CNF slurry solution (2) were randomly selected, and the lengths and diameters of the selected fibers were measured by observing the fibers using an electron microscope (SEM or TEM). As a result, an average thickness of the ten strands of fibers was 3.1 nm, an average length thereof was 1.00 µm, and an average aspect ratio (average length/average thickness) thereof was 323.

### Example 1

84 g of the CNF slurry solution (1) obtained in Preparation Example 1 was charged in a polypropylene container, and 67.5 g of a 1.5 wt.% CMC aqueous solution (CMC: carboxymethylcellulose sodium salt; viscosity of a 1 wt.% aqueous solution at 25°C and 60 rotations: 1500 to 3000 mPa·s; available from Daicel FineChem Ltd., Product No. 2200) was added. Then, 99.0 g of artificial graphite (average particle size: approximately 20 µm) was added as an active material. The solution mixture was stirred for 30 minute at 3000 rpm using a homodisper (available from Tokushu Kika Kogyo Co., Ltd., Model L), resulting in slurry (1).

Regarding the viscosity of the obtained slurry (1), the complex viscosity at 25°C (viscosity at 25°C) and the lowest complex viscosity during heating from 25°C to 80°C at 15°C/minute (lowest viscosity during heating to 80°C) were measured using an MCR rheometer at a frequency of 1 Hz. The viscosity at 25°C, the lowest viscosity during heating to 80°C, and the ratio of (lowest viscosity during heating to 80°C)/(viscosity at 25°C) are shown in Table 1.

### Example 2

A slurry (2) was obtained in the same manner as in Example 1 with the exception that the CNF slurry solution (2) obtained in Preparation Example 2 was used instead of the slurry (1), and the viscosity at 25°C and the lowest viscosity during heating to 80°C of slurry (2) were measured. The viscosity at 25°C, the lowest viscosity during heating to 80°C, and the ratio of (lowest viscosity during heating to 80°C)/(viscosity at 25°C) are shown in Table 1.

### Example 3

A slurry (3) was obtained in the same manner as in Example 1 with the exception that cellulose nanocrystals (CelluForce NCC, available from CelluForce, 1.2 wt.% aqueous slurry solution, average thickness: 7.1 nm, average length: 0.15 µm, average aspect ratio or average length/average thickness: 21) were used instead of the slurry (1), and the viscosity at 25°C and the lowest viscosity during heating to 80°C of slurry (3) were measured. The viscosity at 25°C, the lowest viscosity during heating to 80°C, and the ratio of (lowest viscosity during heating to 80°C)/(viscosity at 25°C) are shown in Table 1.

### Comparative Example 1

A slurry was prepared in the same manner as in Example 1 with the exception that 2 g of an SBR water dispersion (product name TRD 2001, available from JSR) instead of the slurry (1) was used to adjust the water content so that the solid content concentration became 40%, and the viscosity at 25°C and the lowest viscosity during heating to 80°C of the slurry of Comparative Example 1 were measured. The viscosity at 25°C, the lowest viscosity during heating to 80°C, and the ratio of (lowest viscosity during heating to 80°C)/(viscosity at 25°C) are shown in Table 1.

**[Table 1]**

| | Viscosity at 25°C (Pa•s) | Lowest viscosity during heating to 80°C (Pa•s) | (Lowest viscosity during heating to 80°C)/(viscosity at 25°C) |
|---|---|---|---|
| Example 1 | 9.472 | 8.603 | 0.908 |
| Example 2 | 8.074 | 6.164 | 0.763 |
| Example 3 | 2.750 | 1.201 | 0.437 |
| Comparative Example 1 | 2.076 | 0.241 | 0.116 |

### Example 4

A slurry (4) was obtained in the same manner as in Example 1 with the exception that artificial graphite was not added as an active material, and the viscosity at 25°C and the lowest viscosity during heating to 80°C of slurry (4) were measured. The viscosity at 25°C was 3.678 Pa·s, the lowest viscosity during heating to 80°C was 0.700 Pa·s, and the ratio of (lowest viscosity during heating to 80°C)/(viscosity at 25°C) was 0.190.

### Comparative Example 2

A slurry was obtained in the same manner as in Comparative Example 1 with the exception that artificial graphite was not added as an active material, and the viscosity at 25°C and the lowest viscosity during heating to 80°C of the slurry of Comparative Example 2 were measured. The viscosity at 25°C was 0.883 Pa·s, the lowest viscosity during heating to 80°C was 0.049 Pa·s, and the ratio of (lowest viscosity during heating to 80°C)/(viscosity at 25°C) was 0.055.

### Test Example 1

Each of the slurries (1) to (3) obtained in Examples 1 to 3 and the slurry obtained in Comparative Example 1 was applied on a square copper foil having a thickness of 15 µm and a length of 150 mm using an applicator such that the thicknesses of the resulting coating films after drying were 50 µm or greater. Thereafter, with the coating films facing upward, the copper foils were heated to 80°C at 15°C/minute and subjected to drying and solidification for one hour to produce electrodes having an electrode active material layer formed on one side of the copper foil. The film thicknesses of the electrode active material layers of the obtained electrodes were measured using a micrometer (available from Mitutoyo Corporation). The smallest film thickness at an edge of an electrode active material layer was defined as the edge film thickness, while the largest film thickness at a center of an electrode active material layer was defined as the center film thickness. Based on the values, the ratios of the film thickness at an edge of an electrode active material layer to the film thickness at a center of an electrode active material layer, (edge film thickness)/(center film thickness), were calculated. The results are shown in Table 2.

**[Table 2]**

| | Edge film thickness (µm) | Center film thickness (µm) | (Edge film thickness)/(center film thickness) |
|---|---|---|---|
| Example 1 | 114 | 120 | 0.95 |
| Example 2 | 110 | 121 | 0.91 |
| Example 3 | 105 | 117 | 0.90 |
| Comparative Example 1 | 96 | 115 | 0.83 |

Variations of embodiments of the present invention described above are additionally described below.
[1] A slurry containing at least a binder and a fibrous material, the slurry having a ratio of a lowest viscosity up to 80°C (lowest viscosity during heating to 80°C) to a viscosity at 25°C (viscosity at 25°C), (lowest viscosity during heating to 80°C)/(viscosity at 25°C), of 0.12 or greater (preferably 0.15 or greater, more preferably 0.2 or greater, more preferably 0. 25 or greater, more preferably 0.3 or greater, more preferably 0.4 or greater, more preferably 0.5 or greater, more preferably 0.6 or greater, more preferably 0.7 or greater, even more preferably 0.8 or greater, and particularly preferably 0.9 or greater).
[2] The slurry according to [1], wherein a ratio of a highest viscosity up to 80°C (highest viscosity during heating to 80°C) to the viscosity at 25°C (viscosity at 25°C), (highest viscosity during heating to 80°C)/(viscosity at 25°C), is 3.0 or smaller (preferably 2.5 or smaller, more preferably 2.0 or smaller, more preferably 1.5 or smaller, and particularly preferably 1.0 or smaller).
[3] The slurry according to [1] or [2], wherein the viscosity at 25°C is from 0.6 to 100 Pa s (preferably from 0.8 to 50 Pa·s, more preferably from 1.0 to 30 Pa·s).
[4] The slurry according to any one of [1] to [3], wherein the lowest viscosity during heating to 80°C is from 0.25 to 90 Pa·s (preferably from 0.5 to 45 Pa·s, more preferably from 1 to 30 Pa·s).
[5] The slurry according to any one of [1] to [4], wherein the binder is an aqueous binder having a solubility in water at 20°C of 1 g/L or greater, or an aqueous binder dispersed in water at 20°C with a particle size of 1 µm or smaller (particle size measurement method: laser diffraction method).
[6] The slurry according to any one of [1] to [5], wherein the binder has a melting point (or decomposition temperature in case of the binder having no melting point) of 160°C or higher (preferably 180°C or higher, more preferably 200°C or higher; the upper limit is preferably 400°C).
[7] The slurry according to any one of [1] to [6], wherein a viscosity of a 1 wt.% aqueous solution of the binder (at 25°C and 60 rotations) is from 10 to 5000 mPa·s (preferably from 50 to 3000 mPa·s, more preferably from 100 to 2000 mPa·s).
[8] The slurry according to any one of [1] to [7], wherein the binder is at least one selected from the group consisting of a polysaccharide derivative (1), a compound having a constituent unit represented by Formula (2) above, and a compound having a constituent unit represented by Formula (3) above [preferably a polysaccharide derivative (1)].
[9] The slurry according to [8], wherein the polysaccharide derivative (1) is a cellulose or a derivative of a cellulose (preferably a compound having a constituent unit represented by Formula (1-1) above).
[10] The slurry according to [9], wherein the cellulose or the derivative of a cellulose is at least one selected from the group consisting of hydroxyethyl cellulose, hydroxypropyl cellulose, carboxymethyl cellulose, and alkali salts thereof (for example, sodium carboxymethylcellulose and ammonium carboxymethylcellulose).
[11] The slurry according to any one of [1] to [10], wherein the fibrous material is at least one selected from the group consisting of a cellulose fiber, an aramid fiber, a polyphenylene sulfide fiber, a polyimide fiber, a fluorine fiber, a glass fiber, a carbon fiber, a poly-p-phenylene benzoxazole fiber, a polyether ether ketone fiber, a liquid crystal polymer fiber, a metal, a semiconductor, a carbon material, and an electrically conductive polymer (preferably a cellulose fiber and/or an aramid fiber, more preferably a cellulose fiber).
[12] The slurry according to any one of [1] to [11], wherein an average thickness (average diameter D) of the fibrous material is from 1 to 1000 nm (preferably from 3 to 500 nm, more preferably from 3 to 200 nm).
[13] The slurry according to any one of [1] to [12], wherein an average length (average length L) of the fibrous material is from 0.01 to 1000 µm (preferably from 0.3 to 200 µm, more preferably from 0.5 to 100 µm, even more preferably from 1 to 20 µm).
[14] The slurry according to any one of [1] to [13], wherein an average aspect ratio, (average length/average thickness), of the fibrous material is from 10 to 1000 (preferably from 15 to 500, more preferably from 20 to 100).
[15] The slurry according to any one of [1] to [14], wherein a content of the binder in the total amount of nonvolatile matter contained in the slurry is from 0.01 to 2.0 parts by weight (preferably from 0.1 to 1.5 parts by weight, and more preferably from 0.3 to 1.0 parts by weight).
[16] The slurry according to any one of [1] to [15], wherein a total content of the fibrous material and the binder in the total amount of nonvolatile matter contained in the slurry is from 0.01 to 10.0 wt.% (preferably from 0.1 to 5.0 wt.%, particularly preferably from 0.5 to 2.0 wt.%).
[17] The slurry according to any one of [1] to [16], wherein a content of the fibrous material is from 0.5 to 5.0 times (preferably from 1.0 to 3 times, more preferably from 1.0 to 2.0 times) the content of the binder.
[18] The slurry according to any one of [1] to [17], wherein a total solid content concentration of the binder and the fibrous material is from 0.02 to 20 wt.% (preferably from 0.1 to 10 wt.%, more preferably from 0.5 to 5 wt.%).
[19] A solidified product of the slurry described in any one of [1] to [18].
[20] The slurry according to any one of [1] to [18], wherein the slurry further contains an active material.
[21] The slurry according to [20], wherein the active material is at least one selected from the group consisting of a metal oxide, a lithium-containing complex oxide, a simple silicon, a silicon compound, and a carbon material.
[22] The slurry according to [20] or [21], wherein a proportion of the active material in the total amount (100 wt.%) of nonvolatile matter contained in the slurry is 90 wt.% or greater (preferably 95 wt.% or greater, more preferably 99 wt.% or greater).
[23] The slurry according to any one of [20] to [22], wherein a content of the binder is from 0.01 to 10.0 parts by weight (preferably from 0.1 to 5.0 parts by weight, more preferably from 0.3 to 2.0 parts by weight) per 100 parts by weight of the active material.
[24] The slurry according to any one of [20] to [23], wherein a total solid content concentration of the binder, the fibrous material, and the active material is from 20 to 70 wt.% (preferably from 35 to 60 wt.%).
[25] The slurry according to any one of [20] to [24], wherein a content of the binder in a supernatant obtained by centrifuging (for example, 5000 rpm × 5 minutes) the slurry is 45 wt.% or greater (preferably 60 wt.% or greater, more preferably 80 wt.% or greater, and even more preferably 95 wt.% or greater) of the total amount of the binder contained in the slurry.
[26] A solidified product of the slurry described in any one of [20] to [25].
[27] An electrode including a laminate of an electrode active material layer and a current collector, wherein the electrode active material layer includes the solidified product described in [26].
[28] The electrode according to [27], wherein a ratio of a film thickness at an edge of the electrode active material layer (edge film thickness) to a film thickness at a center of the electrode active material layer (center film thickness), (edge film thickness)/(center film thickness), is 0.9 or greater (preferably 0.95 or greater, more preferably 0.98 or greater).
[29] The electrode according to [27], wherein the electrode active material layer has a film thickness of 50 µm or greater (preferably 80 µm or greater, more preferably 100 µm or greater).
[30] A battery provided with the electrode described in any one of [27] to [30].

### Industrial Applicability

The slurry according to an embodiment of the present invention can be suitably used in various applications involving application, drying, and solidification on an adherend, such as paints, foods, and drug additives. When the slurry according to an embodiment of the present invention contains an active material, the slurry can be suitably used to form an electrode active material layer for a battery. The battery according to an embodiment of the present invention can be suitably used in an information device such as a smart phone or a notebook computer, or, a hybrid vehicle or an electric vehicle.

## Claims

1. A slurry comprising at least a binder and a fibrous material, wherein a ratio of a lowest viscosity up to 80°C (lowest viscosity during heating to 80°C) to a viscosity at 25°C (viscosity at 25°C), (lowest viscosity during heating to 80°C)/(viscosity at 25°C), is 0.12 or greater.

2. The slurry according to claim 1, wherein a total solid content concentration of the binder and the fibrous material is from 0.02 to 20 wt.%.

3. The slurry according to claim 1 or 2, wherein the fibrous material is a cellulose fiber.

4. The slurry according to any one of claims 1 to 3, wherein the fibrous material has an average thickness from 1 to 1000 nm and an average aspect ratio from 10 to 1000.

5. A solidified product of the slurry described in any one of claims 1 to 4.

6. The slurry according to any one of claims 1 to 4, wherein the slurry further comprises an active material.

7. The slurry according to claim 6, wherein a total solid content concentration of the binder, the fibrous material, and the active material is from 20 to 70 wt.%.

8. A solidified product of the slurry according to claim 6 or 7.

9. An electrode comprising a laminate of an electrode active material layer and a current collector, the electrode active material layer including the solidified product described in claim 8.

10. The electrode according to claim 9, wherein a ratio of a film thickness at an edge of the electrode active material layer (edge film thickness) to a film thickness at a center of the electrode active material layer (center film thickness), (edge film thickness)/(center film thickness), is 0.9 or greater.

11. A battery comprising the electrode described in claim 9 or 10.
